# EUROPEAN PATENT APPLICATION

(11) **EP 4 369 235 A1**
(43) Date of publication of application: **15.05.2024**
(21) Application number: 22209699.2
(22) Date of filing: 25.11.2022
(51) Int. Cl.: G06F 21/60, G06F 21/62, H04L 9/08, H04L 9/40

(54) **SECURITY SYSTEM AND METHOD FOR REAL-TIME ENCRYPTION OR DECRYPTION OF DATA USING KEY MANAGEMENT SERVER**

(30) Priority: 08.11.2022 KR 20220147490
(71) Applicant: Penta Security Systems, Inc., Seoul 07241 (KR)
(72) Inventor: KIM, Yun Seong, 07969 Seoul (KR); PARK, Sung Jin, 16330 Suwon-si, Gyeonggi-do (KR)
(74) Representative: Zimmermann, Tankred Klaus

(57) **Abstract**

A real-time data encryption or decryption security system using a key management server may comprise: a service interface configured to request an encryption-decryption key from the key management server according to a predetermined operation procedure in response to access to a specific file of an application program and receiving the encryption-decryption key and a first algorithm from the key management server; an access controller acquiring a file path of the specific file based on access information for the specific file, checking whether the specific file exists in an encryption directory, and performing access control of the specific file based on the first algorithm; and an encryption-decryption unit identifying whether the specific file is an encryption or decryption target file, and encrypting or decrypting the encryption or decryption target file using the encryption-decryption key.

## Description

### CROSS-REFERENCE TO RELATED APPLICATIONS

This application claims priority to Korean Patent Application No. 10-2022-0147490, filed on November 8, 2022 with the Korean Intellectual Property Office (KIPO), the entire contents of which are hereby incorporated by reference.

### BACKGROUND

### 1. Technical Field

The present disclosure relates to a security system and method for real-time encryption or decryption of data using a key management server, and more particularly, to a real-time encryption or decryption security system and method capable of requesting and receiving an encryption-decryption key from a key management server to give the application programs running on the Windows operating system a right of access to data and allow writing the data to a physical storage in an encrypted manner or reading the data in a decrypted manner.

### 2. Related Art

Unlike the conventional technologies in which only personal information stored in a database was considered to be an encryption target, recently, encryption is also required for unstructured data including a lot of personal information.

Here, unstructured data means data that is not stored in fixed fields such as images and videos other than text documents and, among the methods for protecting such structured/unstructured data, there is a method of controlling the access of a user or application program with access rights and furthermore, encrypting a data file when writing to a physical storage.

Typically, it is safest to implement access control in the kernel file system, which is primarily difficult to access and imposes various restrictions, and thus many security products are implemented and used in the kernel file system. For example, in the Windows operating system, the mini-filter driver of the kernel file system is most widely used, and access control and file encryption can be implemented using the mini-filter driver.

In order to use a real-time data encryption or decryption security system, a new directory is created and designated as an encryption directory, and real-time encryption or decryption is performed for all data input/output (I/O) operations occurring in the encryption directory.

In order to adapts the data previously recorded in the physical storage to the security system, a data file encryption operation must be performed to encrypt the data previously stored in the physical storage and store encrypted data. Such a data file encryption operation is described in Korean Patent Registered No. 10-2013-6780000 (Secure File System and Management Method Having Realtime Encrypting Data).

The contents of the above Korean Patent Registration are to identify a data file in the kernel file system to apply a real-time encryption security system for data, create file conversion list information of the data file to be encrypted, and encrypt the data of the file whose file conversion has been decided.

However, managing encryption-decryption keys is very important in the method for encrypting and decrypting files in real-time in the kernel file system. The above registered patent does not mention at all how to manage encryption-decryption keys.

In general, it is easy to obtain encrypted data from unauthorized parties. If the encryption-decryption key is also leaked, the data can be immediately decrypted, resulting in a data leak accident.

In addition, the technology of the above registered patent is a comprehensive description of general technology, and it is technically difficult to apply the above registered patent to the Windows operating system in which no vnode exists.

Accordingly, there is a need for a method for real-time encryption or decryption of files or data in the Windows operating system.

### SUMMARY

The present disclosure has been derived to solve the above-described problems of the prior art, and it is an object of the present disclosure to provide a security system and method for real-time encryption or decryption of data that is capable of applying a real-time encryption or decryption technology via a key management server to manage the real-time encryption or decryption security system in the Windows operating system.

It is another object of the present disclosure to a security system and method for real-time encryption or decryption of data based on an encryption-decryption key protection system via a key management server.

It is still another object of the present disclosure to provide a security system and method for real-time encryption or decryption of data that is capable of solving the problems of the real-time encryption or decryption security system that cannot be applied to the Windows operating system.

According to a first exemplary embodiment of the present disclosure, a real-time data encryption or decrytion security system using a key management server may comprise: a service interface configured to request an encryption-decryption key from the key management server according to a predetermined operation procedure in response to access to a specific file of an application program and receiving the encryption-decryption key and a first algorithm from the key management server; an access controller acquiring a file path of the specific file based on access information for the specific file, checking whether the specific file exists in an encryption directory, and performing access control of the specific file based on the first algorithm; and an encryption-decryption unit identifying whether the specific file is an encryption or decryption target file, and encrypting or decrypting the encryption or decryption target file using the encryption-decryption key.

The security system may further comprise a file input-output monitoring module monitoring the access to the specific file of the application program and transmitting, when the application program accesses the specific file, corresponding event information to the access controller.

The access controller may comprise an encryption directory identification module identifying whether an encryption directory exists based on the file path of the specific file.

The access controller may further comprise an execution process acquisition module acquiring an execution process for encrypting or decrypting the specific file and a user acquisition module acquiring a user of the specific file.

The security system may further comprise a policy management module receiving the first algorithm from the service interface and storing the first algorithm in a policy database.

The security system may further comprise an encryption-decryption key management module receiving the encryption-decryption key from the service interface and storing the encryption-decryption key in an encryption-decryption key database.

File context information for encrypting the specific file may comprise an encryption or decryption right, a file path and name, a process path and name, a local drive or a network drive, file mapping, and a username.

According to a second exemplary embodiment of the present disclosure, a real-time data encryption or decrytion security method using a key management server may comprise: requesting an encryption-decryption key from the key management server according to a predetermined operation procedure in response to access to a specific file of an application program; receiving the encryption-decryption key and a first algorithm from the key management server; acquiring a file path of the specific file based on access information for the specific file; checking whether the specific file exists in an encryption directory; performing access control of the specific file based on the first algorithm; identifying whether the specific file is an encryption or decryption target file; and encrypting or decrypting the encryption or decryption target file using the encryption-decryption key.

The security method may further comprise: monitoring the access to the specific file of the application program; and transmitting event information indicative of the application program accessing the specific file to an access controller.

The security method may further comprise: acquiring an execution process for encryption or decrypting the specific file; and acquiring a user of the specific file.

The security method may further comprise: receiving the first algorithm from a service interface connected to the key management server through a network; and storing the first algorithm in a database.

The security method may further comprise: receiving the encryption-decryption key from the service interface; and storing the encryption-decryption key in the database.

File context information for encrypting the specific file may comprise an encryption or decryption right, a file path and name, a process path and name, a local drive or a network drive, file mapping, and a username.

The specific file may be a new technology file system (NTFS) file having an alternate data stream (ADS) area.

The security method may further comprise: generating an encryption target list in a user mode; selecting data to be encrypted from the generated list; determining whether the selected data is in use; blocking access from other applications to the selected data in response to the selected data being not in use; and creating a copy of the encryption target file in the user mode and executing a write command on the data of the encryption target file.

The security method may further comprise returning to selecting the data to be encrypted to select the next data in response to the selected data being in use.

The security method may further comprise: checking whether the file on which the write command is executed is an encryption target file in a kernel mode; performing file encryption using the encryption-decryption key in response to the file be the encryption target file; deleting the original data and changing a name of the copy of the encryption target file to the name of the original data deleted in response to success of the file encryption; and recording log success.

The security method may further comprise logging failure without deleting the original data in response to failure of the file encryption.

The security method may further comprise: checking whether the encryption directory exists; checking, in response to existence of the encryption directory, the encryption directory and subdirectories of the encryption directory without creating an encryption directory to check whether unencrypted data exists; designating, in response to nonexistence of unencrypted data, the encryption directory as the encryption directory of the specific file; and generating and adding, in response to existence of the unencrypted data, to an alternate data stream (ADS) area of the specific file.

The security method may further comprise creating a file context for encrypting the specific file after designating the encryption directory of the specific file.

According to the present disclosure, it is possible to operate a real-time encryption or decryption security system in the Windows operating system by applying a real-time encryption or decryption technology via the key management server.

In addition, it is possible to provide a novel real-time data encryption or decryption security system and method based on the an encryption-decryption key protection system via the key management server.

That is, according to the present disclosure, it is possible to provide a real-time data encryption or decryption security system and method that is capable of solving the problems of the real-time encryption or decryption security system that cannot be applied to the Windows operating system.

### BRIEF DESCRIPTION OF DRAWINGS

FIG. 1 is a conceptual diagram for explaining a real-time data encryption or decryption security system using a key management server (hereinafter abbreviated as 'security system') according to an embodiment of the present disclosure.
FIG. 2 is a signal flow diagram illustrating an encryption-decryption key management procedure that can be employed in the security system of FIG. 1.
FIG. 3 is a flowchart illustrating a procedure for generating and adding encryption target identification data that can be employed in the security system of FIG. 1.
FIG. 4 is a flowchart illustrating a procedure for identifying an encryption target file that can be employed in the security system of FIG. 1.
FIG. 5 is a diagram illustrating a configuration of file context information for encryption or decryption that can be employed in the security system of FIG. 1.
FIG. 6 is a flowchart illustrating an encryption target file identification and log recording procedure after encryption that can be employed in the security system of FIG. 1.
FIG. 7 is a block diagram illustrating a new technology file system (NTFS) file format having an alternate data stream (ADS) that can be employed in the security system of FIG. 1.
FIG. 8 is a schematic block diagram illustrating a real-time data encryption or decryption security system using a key management server (hereinafter abbreviated as 'security system') according to another embodiment of the present disclosure.

### DETAILED DESCRIPTION OF THE EMBODIMENTS

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

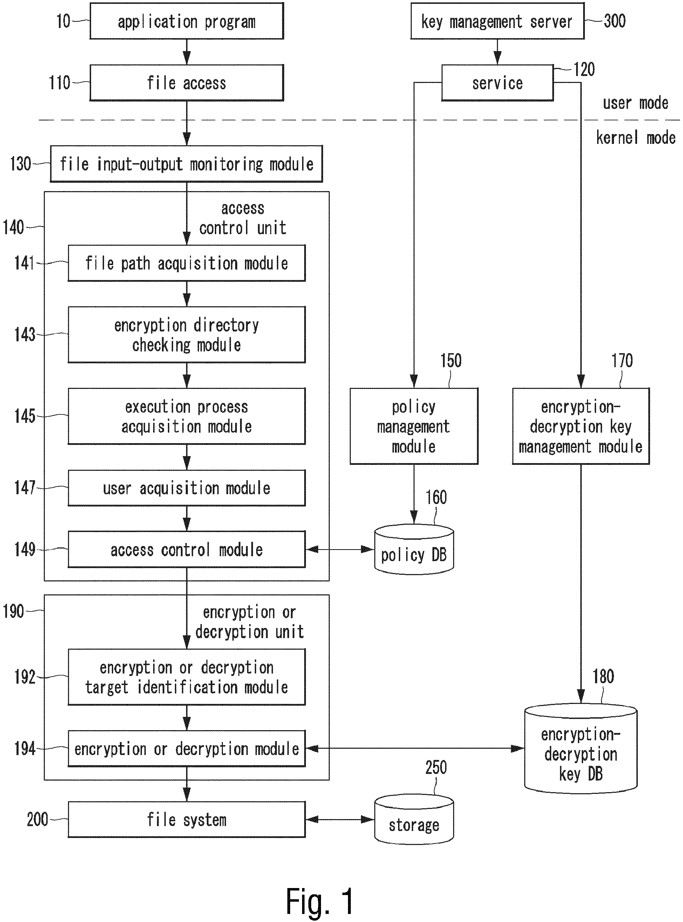

FIG. 1 is a conceptual diagram for explaining a real-time data encryption or decryption security system using a key management server (hereinafter abbreviated as 'security system') according to an embodiment of the present disclosure.

With reference to FIG. 1, the security system may be mounted on a computing device and configured to perform real-time data encryption or decryption security procedure via a file input-output monitoring module 130, an access control unit 140, a policy management module 150, a policy database (DB) 160, an encryption-decryption key management module 170, an encryption-decryption key database (DB) 180, and an encryption or decryption unit 190 while interworking with a key management server through a service 120. The service 120 may be referred to as a key management server-interworking service, an encryption-decryption key management service, or a data encryption or decryption security service.

The service 120 may be configured to request an encryption-decryption key from the key management server 300 according to a predetermined second operation procedure in response to an application program 10 accessing to a specific file 110, receive an encryption key and a first algorithm from the key management server 300, transmit the first algorithm to the policy management module 150, and transmit the encryption key to the encryption key management module 170. The service 120 may be referred to as a service module or a service interface.

The file input/output monitoring module 130 may monitor whether the application program 10 running on the computing device or on an external computing device connected through a network accesses a specific file. When the application program 10 accesses a specific file, the file input/output monitoring module 130 may transmit the corresponding event (hereinafter referred to as 'first event') information to the access control unit 140.

The access control unit 140 may include a file path acquisition module 141, an encryption directory checking module 143, an execution process acquisition module 145, a user acquisition module 147, and an access control module 149. The access control unit 140 may be configured to obtain a file path of a file indicated by the first event information, check whether an encryption directory of the file exists, obtain an execution process for encrypting/decrypting the file, acquire a user based on user information, and control access to the user or file. Here, the access control module 149 may interwork with the policy DB 160 for access control of users or files.

The policy management module 150 may receive the first algorithm from the service 120 and store the first algorithm in the policy DB 160. Here, the first algorithm may include an algorithm for decrypting the encrypted encryption-decryption key.

Also, the policy management module 150 may store a rule or a policy for controlling access to a specific user or a specific file in the policy DB 160. Here, the rule or policy may be preset and stored or determined by a real-time user input through a user interface. The user interface for configuring the rule or policy may include an output interface providing information on whether the file to be encrypted is appropriate or not based on a predetermined user whitelist or information on a file that does not satisfy a predetermined condition. The output interface may include screen information or speaker information using light and sound.

The encryption-decryption key management module 170 may receive the encryption-decryption key from the service 120 and store the encryption-decryption key in the encryption-decryption key DB 180.

The encryption or decryption unit 190 may include an encryption or decryption target identification module 192 and an encryption or decryption module 194. The encryption or decryption unit 190 may identify an encryption or decryption target file to which access control is not applied and perform encryption or decryption on the encryption or decryption target file.

Here, the encryption or decryption target identification module 192 may identify the encryption target file based on the file context information of the encryption or decryption target file. The encryption or decryption module 194 may use the encryption-decryption key stored in the encryption-decryption key DB 180 for encryption or decryption of the encryption or decryption target file. The encryption or decryption module 194 may also perform a log procedure after encryption of the encryption target file.

The file system 200 of the computing device may store the file encrypted/decrypted by the encryption or decryption module 194 in the storage 250.

Although the description has been made of the embodiment of a configuration in which the policy management module 150 and the encryption-decryption key management module 170 separately manage the first algorithm and the encryption-decryption key, the present disclosure is not limited thereto, and the encryption-decryption key management module 170 may be configured to receive the first algorithm together with the encryption-decryption key from the service interface. In this case, the policy DB 160 and the encryption-decryption key DB 180 may be implemented as a single database.

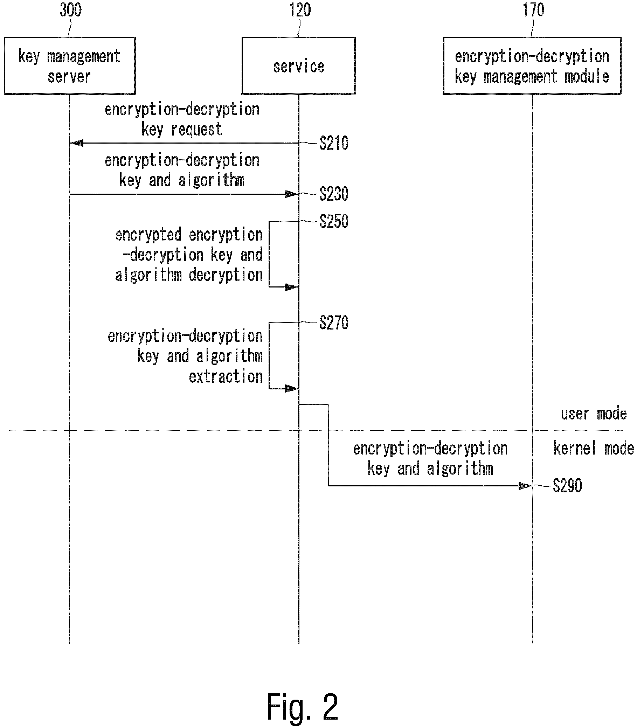

FIG. 2 is a signal flow diagram illustrating an encryption-decryption key management procedure that can be employed in the security system of FIG. 1.

With reference to FIG. 2, the security system may perform an encryption-decryption key management procedure for real-time encryption or decryption of data via the service 120 and the encryption-decryption key management module 170 while interworking with the key management server 300. The service 120 and the encryption-decryption key management module 170 may be included in the security system.

For encryption-decryption key management, the service 120 may first request an encryption-decryption key from the key management server 300 in the user mode at step S210.

Next, the service 120 may receive the first algorithm for encryption-decryption key management together with the encryption-decryption key from the key management server 300 at step S230.

Next, the service 120 may decrypt the encrypted encryption-decryption key via the first algorithm at step S250.

Next, the service 120 may extract the encryption-decryption key and the first algorithm in the user mode at step S270.

Next, the service 120 may deliver the extracted encryption-decryption key and the first algorithm to the encryption-decryption key management module 170 in the kernel mode at step S290.

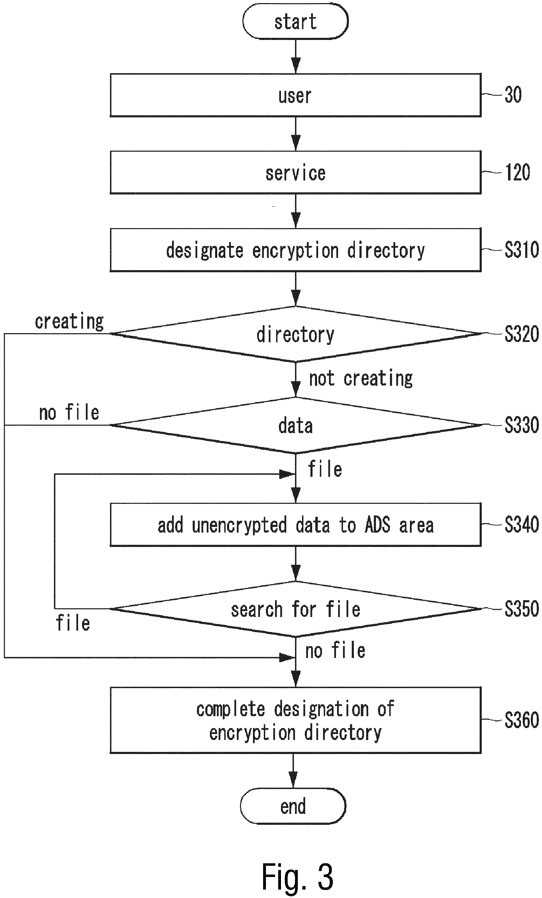

FIG. 3 is a flowchart illustrating a procedure for generating and adding encryption target identification data that can be employed in the security system of FIG. 1.

With reference to FIG. 3, when a specific directory is designated, at step S310, as an encryption directory by a user 30 for a security target identification data generation and addition service 120, the security system may determine at step S320 whether an encryption directory exists, create, when no encryption directory exists, a directory (creating at step S320), designate the created directory as the encryption directory at step S360, and terminate the procedure.

On the other hand, when the encryption directory exists, the security system may not create the encryption directory (not creating at step S320), check the directory and subdirectories to determine at step S330, designate, when there is no data (there is no file at step S330), the corresponding directory as the encryption directory at step S360, and terminate the procedure.

Meanwhile, when data exists (there is a file at step S330), the security system generates and adds unencrypted identification data to the Alternate Data Stream (ADS) area at step S340.

Next, the security system searches the file for the next data at step S350 and generates and adds, when there is a file corresponding to the next data (there is a file in S350), unencrypted identification data to the Alternate Data Stream (ADS) area at step S340. This process may be repeated until there is no file corresponding to the next data.

On the other hand, when there is no file corresponding to the next data (there is no file in S350) as a result of the file search for the next data, the security system determines that the process of generating and adding unencrypted identification data to all data is completed, designates the directory as an encrypted directory at step S360, and ends the procedure.

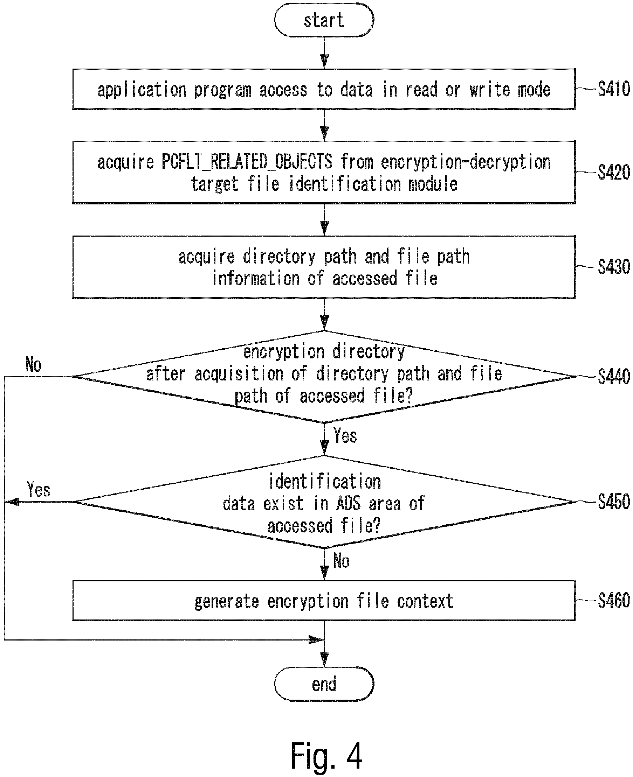

FIG. 4 is a flowchart illustrating a procedure for identifying an encryption target file that can be employed in the security system of FIG. 1.

With reference to FIG. 4, for identification of an encryption target file, an application program of a computing device equipped with a security system may access data in a read mode or a write mode at step S410. The write mode may correspond to the creation mode.

Next, the kernel file system may transmit, at step S420, the first information for identifying the encryption or decryption target file to the encryption or decryption target file identification module (hereinafter simply referred to as 'file identification module') of the security system. The first information may include PCFLT_RELATED_OBJECTS information, which is a windows kernel structure used in the C programming language.

Next, the file identification module may acquire, at step S430, the directory path and file name from the first information received from the kernel file system.

Next, the file identification module may determine at step S440 whether the acquired directory path is in the previously set encryption directory policy list.

When the acquired directory path is not in the encryption directory policy list (No at step S440), the file identification module may not proceed any further and terminate the current process while passing the return value for the current process to the kernel file system to pass the control back to the kernel file system for execution of the normal routine.

On the other hand, when the acquired directory path is in the encryption directory policy list (Yes at step S440), the file identification module accesses the ADS area with the file object and instance in the acquired first information to determine at step S450 whether the encryption target identification data exists. Encryption target identification data may refer to non-encrypted identification data.

When unencrypted identification data exists (Yes at step S450), the file identification module may determine that the original data is not yet encrypted and terminate the process without creating a file context of an encryption target.

On the other hand, when no unencrypted identification data exists (No at step S450), the file identification module may determine that the accessed file is an encryption target file and create a file context of the encrypted file at step S460.

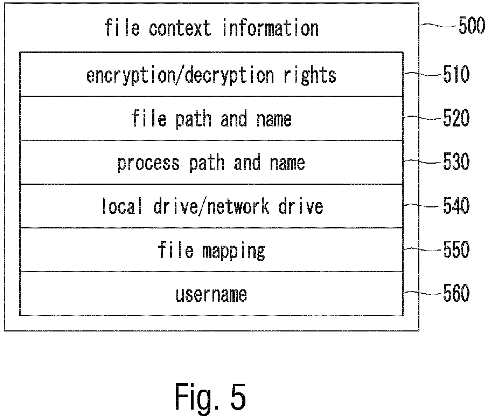

FIG. 5 is a diagram illustrating a configuration of file context information for encryption or decryption that can be employed in the security system of FIG. 1.

With reference to FIG. 5, the file context information 500 for encryption or decryption may include a field 510 for encryption and/or decryption rights 510, a field 520 for file paths and names, a field 530 for process paths and names, a field 540 local drives or network drives, a field 550 for file mapping, and a field 560 for usernames.

The first field 510 for encryption and/or decryption (simply 'encryption/decryption') rights stores information about encryption or decryption right when data is acquired.

The second field 520 for the file paths and names stores information for access control of the encrypted directory and encryption/decryption.

The third field 530 for the process paths and names stores information for encryption directory access control and encryption/decryption.

The fourth field 540 for the local drives or the network drives stores information for encryption/decryption processing according to the drive in which the data to be accessed is stored.

The fifth field 550 for file mapping stores information for encryption/decryption processing according to a case in which an access method is file mapping.

The sixth field 560 for the usernames may store information for encryption directory access control and encryption/decryption.

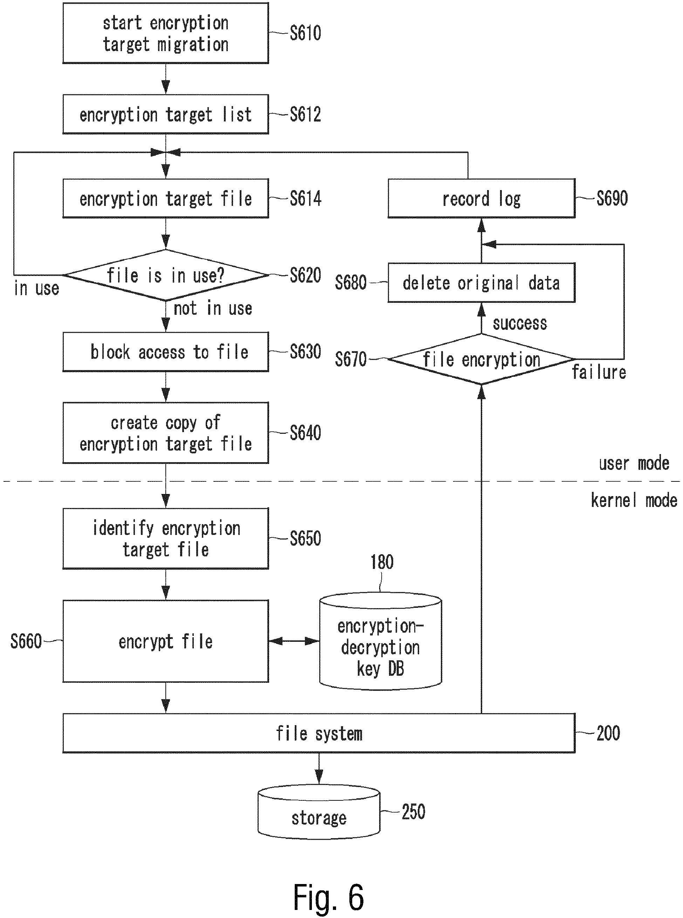

FIG. 6 is a flowchart illustrating an encryption target file identification and log recording procedure after encryption that can be employed in the security system of FIG. 1.

With reference to FIG. 6, for a log recording service after encryption target file identification and encryption, the security system may generate an encryption target list at step S612 when file migration starts at step S610.

Next, the security system may select data to be encrypted from the generated list at step S614. The security system may determine at step S620 whether the selected data is in use.

When the selected data is in use (in use at step S620), the procedure may return to step S614 of selecting the data to be encrypted and select the next data.

On the other hand, when the selected data is not in use (not in use at step S620), the security system may block, at step S630, access from other applications to the previously selected data.

Next, the security system creates, at step S640, a copy of the encryption target file in the user mode and executes a 'write' command on the data of the encryption target file.

Next, the file system 200 checks at step S650 whether the file on which the write command is executed in the kernel mode is an encryption target file. In the case of an encryption target, the file system 200 performs file encryption at step S660. The file system 200 may interwork with an encryption-decryption key DB 180 for file encryption. The file system 200 may also store the encrypted file in the storage 250. The storage 250 may include physical storage such as a memory or a magnetic disk.

When the file encryption is successful (success at step S670), the security system may delete the original data at step S680. Here, the security system may change the name of the copy to that of the original data deleted. Then, the security system may record the success log at step S690 and perform the encryption target file selection operation of step S614 to select the next data.

On the other hand, when file encryption fails (failure of S670), the security system may record the failure log at step S690 without executing the original data deletion process and perform the encryption target file selection operation of step S614 to select the next data.

The security system may repeatedly perform operations from step S614 of selecting an encryption target file to step S690 of recording a log until all data is encrypted.

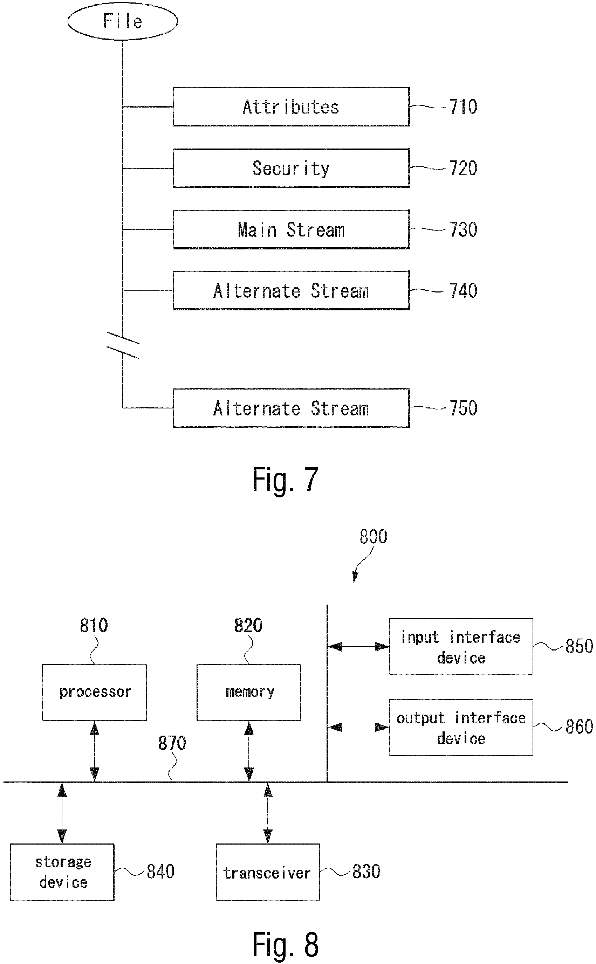

FIG. 7 is a block diagram illustrating a new technology file system (NTFS) file format having an alternate data stream (ADS) that can be employed in the security system of FIG. 1.

With reference to FIG. 7, a file 700 of NTFS that can be employed in the security system of the present embodiment may be represented by a name such as name.txt and may include a filed 710 for attributes, a field 720 for security, a field 730 for the mainstream, a field 740 for the first alternate stream, and a field 750 for the nth alternate stream. Here, n is a natural number equal to or greater than 2.

Every file on a storage device formatted as NTFS is assigned one or more data streams. In particular, one of the features of NTFS is that a file can contain multiple data streams.

Main stream 730 is an unnamed primary data stream that can be executed when double-clicking a file on a computing device or running the file from a command prompt.

Each of the plurality of alternate streams 740 and 750 is an alternate data stream (ADS) assigned a name so as to be easily distinguished from the unnamed primary data stream.

Using the ADS area or a means or component similar or identical in function thereto, it is possible to effectively implement the file context information for the encryption or decryption of the encryption target file.

Meanwhile, although the Windows versions after Windows XP version prevents an execution file from being executed in the ADS area, the present embodiment in which the ADS area is used to provide information on encryption and/or decryption rights, file paths and names, process paths and names, local drives or network drives, file mapping, user names, or a combination thereof makes it possible to implement effectively providing file context information of an encryption target file using an NTFS file.

FIG. 8 is a schematic block diagram illustrating a real-time data encryption or decryption security system using a key management server (hereinafter abbreviated as 'security system') according to another embodiment of the present disclosure.

With reference to FIG. 8, the security system 800 may include at least one processor 810, a memory 820, and a transceiver 830 connected to a battery management system (BMS) or an external device to perform communication. In addition, the security system 800 may further include a storage device 840, an input interface device 850, and an output interface device 860. Each of the components included in the security system 800 may be connected via a bus 870 to communicate with each other.

In addition, each of the components included in the security system 800 may be connected to the processor 810 as a center via an individual interface or bus other than the common bus 870. For example, the processor 810 may be connected to at least one of the memory 820, the transceiver 830, the storage device 840, the input interface device 850, and the output interface device 860 via a dedicated interface.

The processor 810 may refer to a central processing unit (CPU), a graphics processing unit (GPU), or a dedicated processor on which the methods according to embodiments of the present disclosure are performed.

Each of the memory 820 and the storage device 840 may be configured as at least one of a volatile storage medium and a non-volatile storage medium. For example, the memory 820 may be configured as at least one of read-only memory (ROM) and random access memory (RAM).

The transceiver 830 may include a sub-communication system for performing communication with an external user terminal, a gateway, a wired network, a base station of a wireless network, and the like. The sub-communication system may be configured to support a wired and/or wireless communication protocol.

The input interface device 850 may include an input signal processing unit that maps, to a prestored instruction, or processes a signal input through at least one input means selected among input means such as a keyboard, a microphone, a touch pad, and a touch screen.

The output interface device 860 may include an output signal processing unit mapping, to a prestored signal form or level, or processing a signal output under the control of the processor 810 and at least one output means outputting a signal or information in the form of vibration or light according to a signal of the output signal processing unit. The at least one output means may include at least one selected among output means such as a speaker, a display device, a printer, an optical output device, and a vibration output device.

The processor 810 may execute program instructions stored in at least one of the memory 820 and the storage device 840.

Program instructions may include at least one instruction for implementing the procedure for the encryption key management service (refer to FIG. 2), at least one instruction for implementing the procedure for encryption target identification data generation and addition service (refer to FIG. 3), at least one instruction for implementing the procedure for the encryption target file identification service (refer to FIG. 4), and at least one instruction for implementing the procedure for log recoding service after encryption target file identification and encryption (refer to FIG. 7).

According to this embodiment, it is possible to achieve the following operational effects.

First, it is possible to prepare an encryption-decryption key protection system through encryption-decryption key management via a key management server. That is, it is possible to perform encryption and decryption with the encryption-decryption key received from the key management server. Since the key management server manages the encryption-decryption key, it is possible to guarantee strong security. It is also possible to have the encryption-decryption key used only for encryption and decryption in the kernel file system without being stored in the system.

Second, it is possible to solve the problems of the real-time encryption or decryption security system that cannot be applied in the Windows operating system. That is, the existing problem can be solved with the method of adding unencrypted identification data to the alternate data stream (ADS) area rather than the method of recording in the metadata. In addition, it is possible to encrypt all the data in directories in real-time by adopting per-directory real-time encryption or decryption security system. In addition, there is no need for an encrypted file header in front of the encrypted data and no change of the encrypted data in size.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the scope of the disclosure. Thus, it will be understood by those of ordinary skill in the art that various changes in form and details may be made without departing from the spirit and scope as defined by the following claims.

## Claims

1. A real-time data encryption or decryption security system using a key management server, the security system comprising:
a service interface configured to request an encryption-decryption key from the key management server according to a predetermined operation procedure in response to access to a specific file of an application program and receiving the encryption-decryption key and a first algorithm from the key management server;
an access controller acquiring a file path of the specific file based on access information for the specific file, checking whether the specific file exists in an encryption directory, and performing access control of the specific file based on the first algorithm; and
an encryption-decryption unit identifying whether the specific file is an encryption or decryption target file, and encrypting or decrypting the encryption or decryption target file using the encryption-decryption key.

2. The security system of claim 1, further comprising a file input-output monitoring module monitoring the access to the specific file of the application program and transmitting, when the application program accesses the specific file, corresponding event information to the access controller.

3. The security system of claim 1, wherein the access controller comprises an encryption directory identification module identifying whether an encryption directory exists based on the file path of the specific file.

4. The security system of claim 3, wherein the access controller further comprises an execution process acquisition module acquiring an execution process for encrypting or decrypting the specific file and a user acquisition module acquiring a user of the specific file.

5. The security system of claim 1, further comprising a policy management module receiving the first algorithm from the service interface and storing the first algorithm in a policy database.

6. The security system of claim 5, further comprising an encryption-decryption key management module receiving the encryption-decryption key from the service interface and storing the encryption-decryption key in an encryption-decryption key database.

7. The security system of claim 1, wherein file context information for encrypting the specific file comprises an encryption or decryption right, a file path and name, a process path and name, a local drive or a network drive, file mapping, and a username.

8. A real-time data encryption or decryption security method using a key management server, the security method comprising:
requesting an encryption-decryption key from the key management server according to a predetermined operation procedure in response to access to a specific file of an application program;
receiving the encryption-decryption key and a first algorithm from the key management server;
acquiring a file path of the specific file based on access information for the specific file;
checking whether the specific file exists in an encryption directory;
performing access control of the specific file based on the first algorithm;
identifying whether the specific file is an encryption or decryption target file; and
encrypting or decrypting the encryption or decryption target file using the encryption-decryption key.

9. The security method of claim 8, further comprising:
monitoring the access to the specific file of the application program; and
transmitting event information indicative of the application program accessing the specific file to an access controller.

10. The security method of claim 9, further comprising:
acquiring an execution process for encryption or decrypting the specific file; and
acquiring a user of the specific file.

11. The security method of claim 8, further comprising:
receiving the first algorithm from a service interface connected to the key management server through a network; and
storing the first algorithm in a database.

12. The security method of claim 11, further comprising:
receiving the encryption-decryption key from the service interface; and
storing the encryption-decryption key in the database.

13. The security method of claim 8, further comprising:
generating an encryption target list in a user mode;
selecting data to be encrypted from the generated list;
determining whether the selected data is in use;
blocking access from other applications to the selected data in response to the selected data being not in use; and
creating a copy of the encryption target file in the user mode and executing a write command on the data of the encryption target file.

14. The security method of claim 13, further comprising:
checking whether the file on which the write command is executed is an encryption target file in a kernel mode;
performing file encryption using the encryption-decryption key in response to the file be the encryption target file;
deleting the original data and changing a name of the copy of the encryption target file to the name of the original data deleted in response to success of the file encryption; and
recording log success.

15. The security method of claim 8, further comprising:
checking whether the encryption directory exists;
checking, in response to existence of the encryption directory, the encryption directory and subdirectories of the encryption directory without creating an encryption directory to check whether unencrypted data exists;
designating, in response to nonexistence of unencrypted data, the encryption directory as the encryption directory of the specific file; and
generating and adding, in response to existence of the unencrypted data, to an alternate data stream (ADS) area of the specific file.
